# EUROPÄISCHE PATENTSCHRIFT

(11) **EP 3 231 630 B1**
(45) Veröffentlichungstag und Bekanntmachung des Hinweises auf die Patenterteilung: **02.06.2021**
(21) Anmeldenummer: 17164848.8
(22) Anmeldetag: 04.04.2017
(51) Int. Cl.: B60B 1/00, B60B 5/02, B60B 21/02, B29C 70/00, B29C 45/00

(54) **(SCHLAUCHREIFEN-)FELGE UND VERFAHREN ZU DEREN HERSTELLUNG**
(TUBULAR TYRE) RIM AND METHOD FOR ITS MANUFACTURE
JANTE (POUR PNEU À CHAMBRE À AIR) ET SON PROCÉDÉ DE FABRICATION

(30) Priorität: 08.04.2016 DE 102016106530
(43) Veröffentlichungstag der Anmeldung: 18.10.2017
(73) Patentinhaber: Munich Composites GmbH, 82024 Taufkirchen (DE)
(72) Erfinder: Fröhlich, Felix, 82024 Taufkirchen (DE); Lichtenberg, Christian, 82024 Taufkirchen (DE); Rüger, Olaf, 82024 Taufkirchen (DE); Wachter, Florian, 81927 München (DE)
(74) Vertreter: Winter, Brandl - Partnerschaft mbB

(56) Entgegenhaltungen:
- EP-A1- 1 673 238
- EP-A1- 2 626 218
- CN-Y- 2 151 027
- DE-A1-102006 010 445
- DE-A1-102011 087 921
- GB-A- 2 051 662

## Beschreibung

Die Erfindung betrifft eine Felge für ein Fahrrad, wobei auf der Außenseite eine Fülllage vorhanden ist und die Felge im Liquid Composites Molding, etwa einem RTM-Verfahren oder einem VARI-Verfahren, hergestellt ist. Weiterhin betrifft die Erfindung ein Verfahren zur Herstellung einer solchen Felge.

Die Felge ist eine Schlauchreifenfelge oder Clincherfelge, beispielsweise mit einer (Flecht-)Hülse. Unter einer Flechthülse wird eine solche Hülse verstanden, die durch in Harz eingebettete Verstärkungsfasern, welche geflochten aufgebracht wurden, eine vollständig geschlossene Hülse ausbilden. Solche Flechthülsen können durch sich flechtartig kreuzende Fasern oder sogar Faserbündel gebildet sein. Dabei sind ca. 45°-Fasern miteinander kombinierbar und durch ca. 0°-Fasern verstärkbar. Es müssen nicht exakt 45° und auch nicht exakt 0° eingehalten werden, sondern es können Abweichungen von +/- 10° vorhanden sein.

Aus dem Stand der Technik sind bereits zahlreiche Schlauchreifenfelgen bekannt. Üblicherweise werden Schlauchreifenfelgen aus Stahl und seit geraumer Zeit auch aus Leichtmetalllegierungen gefertigt. In neuester Zeit haben sich auch immer mehr Kunststoffmaterialien durchgesetzt, wie Faserverbundwerkstoffe. Besonders bewährt haben sich Faserverbundwerkstoffe, in denen Kohlefasern, Aramidfasern und/oder Glasfasern eingesetzt werden.

Unter anderem offenbart die DE 10 2015 102 466 A1 eine Felge für ein Fahrrad, mit einer Reifenkontakteinrichtung, die zum Befestigen eines Drahtreifens oder eines Schlauchreifens vorbereitet ist, wobei die Reifenkontakteinrichtung einen Kern aufweist, der von wenigstens einem Verstärkungsfaden so umwickelt ist, dass der Kern von wenigstens einer durch den Verstärkungsfaden gebildeten Tragschicht bedeckt ist, dadurch gekennzeichnet, dass die Reifenkontakteinrichtung zumindest radial innenseitig von einer aus wenigstens einem Verstärkungsfaden gebildeten Deckschicht so bedeckt ist, dass ein Verstärkungsring zwischen der Deckschicht und der Reifenkontakteinrichtung vorhanden ist. Auch offenbaren die DE 10 2011 087 921 A1, die DE 10 2006 010 445 A1 und die CN 2151027 Y jeweils eine Felge aus Faserverbundwerkstoff. Eine weitere Fahrradfelge ist aus EP 1 673 238 B1 bekannt.

Allerdings weisen die bestehenden und bekannten Schlauchreifenfelgen immer Nachteile in puncto Qualität, Gewicht, Festigkeit, Komfort und gewünschte Herstellgeschwindigkeit auf.

Diese Aufgabe wird bei einer gattungsgemäßen Felge/Schlauchreifenfelge erfindungsgemäß dadurch gelöst, dass die Fülllage als eine Vlieslage oder mehrere Vlieslagen ausgestaltet ist.

Vorteilhafte Ausführungsformen sind in den Unteransprüchen beansprucht und werden nachfolgend näher erläutert.

Es sein prinzipiell darauf hingewiesen, dass die Fülllage nach alternativen Ausbildungen, die nicht Gegenstand der Ansprüche sind, auch als eine Lage enthaltend ein Gewebe, ein Gelege oder vorbebinderte Kurzfasern ausgestaltet ist, wobei die vorbebinderten Kurzfasern beispielsweise eine Länge zwischen ca. 1 mm und ca. 15 mm aufweisen.

Bezüglich der erfindungsgemäßen Felge ist es auch von Vorteil, wenn die Breite der Fülllage bis mindestens zu den an der Felge ausgebildete Felgenhörnern ragt oder maximal ca. 2,0 cm über die Felgenhörner in Flankenbereiche der Felge hineinragt.

Zuträglich ist es auch, wenn die Fülllage als umlaufender / durchgehender oder aneinandergestückelter Streifen ausgebildet ist und/oder als Vlieslage ausgebildet ist und beispielsweise auf einer radialen Außenseite der Felge vorhanden ist.

Wenn eine Hülse, etwa nach Art einer Flechthülse vorhanden ist und die Fülllage, etwa als Vlieslage, in Harz eingebettet ist, so kann eine ganz besondere Ausführungsform geschaffen werden.

Es ist vorteilhaft, wenn eine Flechtlage die ca. 0,2- bis ca. 2,5-fache Dicke der Vlieslage besitzt.

Eine Felge bei der die Fülllage als vorkonfektionierter Ring oder Ringabschnitt ausgebildet ist, ist auch von Vorteil.

Es ist wünschenswert, wenn im Montagezustand die Vlieslage auf die Flechthülse aufgespannt ist oder vorgespannt angebracht ist.

Die Aufgabe der Erfindung wird erfindungsgemäß auch dadurch gelöst, dass ein Verfahren zum Herstellen einer Felge der erfindungsgemäßen Art eingesetzt wird, wobei eine Vlieslage an einer Außenseite einer Flechthülse vor Benetzung mit Harz in einer Form unter Nutzung eines Liquid Composite Moldingverfahrens angebracht wird. Dieses Verfahren kann dadurch weitergebildet werden, dass die Fülllage einen Bremsflankenbereich einschließt, oder von diesem entfernt wird oder entfernt aufgebracht ist.

Mit anderen Worten betrifft die Erfindung eine gattungsgemäße Felge, bei der auf der Außenseite eine Vlieslage vorhanden ist. Durch die Vlieslage wird unerwarteterweise eine radikale Steigerung der Impact-Resistance, also der Widerstand und die Schlagfestigkeit erhöht. Es wird somit ein Sicherheits-Feature realisiert, das einen "Fail Save"-Aspekt umsetzt. Die Vlieslage, also eine Lage aus vliesartig aneinandergrenzenden kurzen Fasern, vorzugsweise aus Kohlefasern, ist jedoch so eingesetzt, dass sie nicht zwingend ein strukturelles Unterbauteil ausbildet. Ein Vlies ist somit ein Gebilde aus Fasern begrenzter Länge, Endlosfasern (Filamenten) oder geschnittenen Garnen jeglicher Art und jeglichen Ursprungs, die auf irgendeine Weise zu einem Vlies (einer Faserschicht, einem Faserflor) zusammengefügt und auf irgendeine Weise miteinander verbunden worden sind; davon ausgeschlossen ist das Verkreuzen bzw. Verschlingen von Garnen, wie es beim Weben, Wirken, Stricken, der Spitzenherstellung, dem Flechten und Herstellung von getufteten Erzeugnissen geschieht.

Vorteilhafte Ausführungsformen sind in den Unteransprüchen beansprucht und werden nachfolgend näher erläutert.

Dabei ist es von Vorteil, wenn die Vlieslage überwiegend oder nur/ ausschließlich auf der radialen Außenseite vorhanden ist. Bei einer solchen Anordnung, steht die Vlieslage nur auf der radialen Außenseite der Flechthülse mit dieser in Kontakt oder umgreift eine Kante in Richtung einer Bremsflanke nur soweit, dass der Bremsflankenbereich und die Seitenwände der fertigen Felge von Fasern der Vlieslage frei bleiben.

Andererseits können die Fasern des Vlies gezielt in den Bremsflankenbereich eingebracht werden. Dadurch kann das Bremsverhalten beeinflusst werden.

Wenn die Flechthülse und die Vlieslage in Harz eingebettet sind, so wird eine hohe Steifigkeit und Festigkeit der fertigen Schlauchreifenfelge erzwungen.

Es hat sich als vorteilhaft herausgestellt, wenn die Flechtlage die ca. 0,2- bis 2,5-fache Dicke der Vlieslage besitzt. Gerade bei einer solchen Dickenwahl stellt sich ein gutes Gleichgewicht zwischen Gewicht und Steifigkeit sowie Ausfallsicherheit ein. Insbesondere bewährt haben sich Dicken, die die 0,4-, 0,5-, 0,6- sowie 1,3-, 1,4-, 1,5-, 1,6-, 1,7-, 1,8-, 1,9- und 2,0-fache Dicke der Vlieslage besitzen. Es ist von Vorteil, wenn die Flechtlage eine gleichbleibende Dicke hat, wobei Dickenvariationen von 0,1 % wünschenswert sind.

Damit die Montage einfacher vonstatten geht, ist es von Vorteil, wenn die Vlieslage an der Außenseite der Flechtlage über eine Verklebung / ein Harz und/oder eine Naht festgelegt / befestigt ist. Bei Nutzen einer Naht kann auf Kleber verzichtet werden, sodass dieser Kleber beim späteren Aushärten der Felge unter Druck / Temperaturerhöhung nicht in den empfindlichen Bremsflankenbereich laufen kann.

Es hat sich bewährt, wenn die Naht durch zumindest einen in Umfangsrichtung oder quer / senkrecht dazu verlaufenden bspw. trockenen Faden oder bspw. trockenes Faserbündel während der Fertigung gebildet ist.

Während des Montagezustands ist es von Vorteil, wenn die Vlieslage auf die Flechtlage / Flechthülse aufgespannt ist oder vorgespannt angebracht ist, wobei ein präzises Positionieren der Einzelbauteil aneinander möglich wird. Hochfeste und exakt laufende Schlauchreifenfelgen sind dann die Folge.

Die Erfindung betrifft auch ein Verfahren zum Herstellen einer Schlauchreifenfelge, vorzugsweise der erfindungsgemäßen Art, wobei eine Vlieslage an einer Außenseite der Flechthülse / Flechtlage vor Benetzung mit Harz angebracht wird.

Dabei ist es von Vorteil, wenn die Vlieslage von einem Bremsflankenbereich entfernt wird oder entfernt ist.

Ferner ist es von Vorteil, wenn eine Vlieslage vorgespannt an der Flechthülse aufgeclipst wird. Die beispielsweise bebinderte oder vorgehärtete oder vorfixierte Vlieslage ist dann mit Vorspannung auf die Flechthülse aufbringbar / aufsetzbar, etwa nach Art einer Klammer.

Ebenfalls zweckmäßig ist es, wenn als Harz ein Thermoplastharz und/oder ein Duroplastharz in eine die Flechthülse / Flechtlage mit daran befestigter Vlieslage aufnehmende Form eingebracht wird. Schnelle Verfahren, die sich bewährt haben, wie RTM-Verfahren, lassen sich dann umsetzen.

Es sind 1, 2 oder mehr Umflechtvorgänge durchführbar, insbesondere um einen Überlappbereich zu erreichen. Dort sind dann drei und mehr Lage denkbar. Der Überlappbereich ist sinnvollerweise im Bereich eines Ventilloches ausformbar.

Die Erfindung wird nachfolgend mit Hilfe einer Zeichnung näher erläutert. Die Figur ist lediglich schematischer Natur und dient nur dem Verständnis der Erfindung.

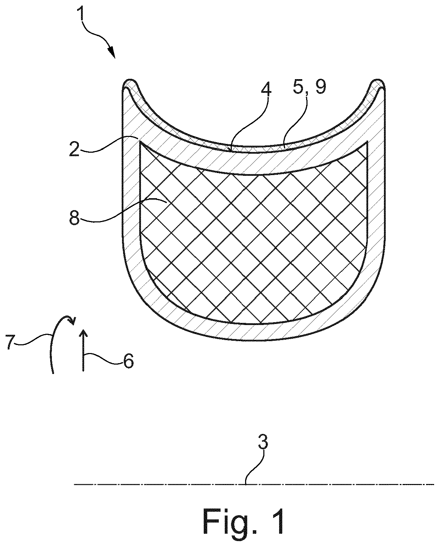

In dieser Zeichnung, nämlich der Fig. 1, ist ein Querschnitt durch eine erfindungsgemäße Schlauchreifenfelge 1 oberhalb einer Rotationsachse / Symmetrieachse 3 der Schlauchreifenfelge dargestellt. Dabei ist dort ein Ausschnitt der erfindungsgemäßen Schlauchreifenfelge 1 mit einer Flechthülse 2 dargestellt.

Die Flechthülse 2 ist ein umlaufend geschlossenes Bauteil, sodass sich die Flechthülse 2 um die Symmetrieachse 3 / Rotationsachse 3 herum erstreckt. Auf einer radialen Außenseite 4 ist an der Flechthülse 2 eine als Vlieslage 9 konfektionierte Füllage 5 angebracht. Die Vlieslage 9 ist ebenso umlaufend und in einem nicht dargestellten Bereich entweder direkt mit einem Ende an ein anderes Ende anstoßend oder überlappend angeordnet. Für den Überlappungsbereich ist extra ein Rücksprung in der Flechthülse 2 denkbar. Der Rücksprung ist entweder zu der Stelle, an der sich die einzelnen, durch mehrere sich kreuzende Fasern gebildeten Lage/Lagen überlappen, versetzt oder exakt dort angeordnet.

Die Radialrichtung ist mit dem Pfeil 6 angedeutet. Die Umfangsrichtung ist mit dem Pfeil 7 angedeutet. Die Vlieslage 9 ist im vorliegenden Ausführungsbeispiel durch eine nicht dargestellte Naht auf der radialen Außenseite 4 der Flechthülse 2 befestigt. Im Inneren der Flechthülse 2 ist ein verlorener Kern 8 vorhanden. Der verlorene Kern ist aus einem solchen Material, das ausschmelzbar ist. Beispielsweise hat sich "Wachs", ergo ein thermoplastisches Material bewährt.

Es kann auch ein anderer, etwa verbleibender Kern verwendet werden.

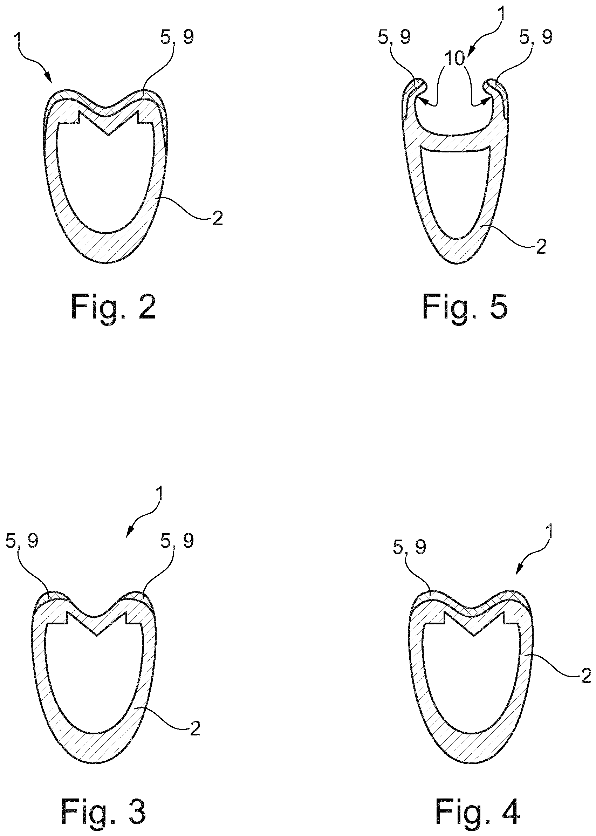

In den Figuren 2 bis 4 sind als "tubular rims" bezeichnete Felgen im Querschnitt dargestellt, wobei immer eine Füllage 5 als Vlieslage auf der radialen Außenseite der Felge 1 aufgebracht ist. Anders als bei den Felgen 1 der Figuren 2 und 4 sind in der Ausführungsform der Figur 3 zwei voneinander getrennten Vlieslagenstrukturen eingesetzt.

In der Figur 5 ist eine "Clincher"-Variante einer Felge 1 realisiert, also eine Drahtreifenfelge. Die Drahtreifenfelge (auch unter Hakenfelge oder Clincher bekannt) ist eine Felge mit einem umlaufenden innenliegenden kleinen Vorsprung an beiden Felgenrändern, ergo Felgenhörnern 10 , der den Draht- oder Kevlarring des Draht- oder Faltreifens festhält. Ähnliche Felgen sind innen glatt und benötigen Wulstreifen.

Der radial äußerste Bereich zwischen Felgenhörnern wird üblicherweise spanabhebend entfernt. Dort wird also die Vlieslage 5 zusammen mit der darunterliegenden Flecht- oder Gewebetragschicht beseitigt.

### Bezugszeichenliste

- 1: Schlauchreifenfelge
- 2: Flechthülse
- 3: Symmetrieachse
- 4: radiale Außenseite
- 5: Fülllage
- 6: Radialrichtung
- 7: Umfangsrichtung
- 8: verlorener Kern
- 9: Vlieslage
- 10: Felgenhorn

## Patentansprüche

1. Felge (1) für ein Fahrrad wobei auf der Außenseite (4) eine Fülllage (5) vorhanden ist und die Felge (1) im Liquid Composites Molding, etwa einem RTM-Verfahren oder einem VARI-Verfahren, hergestellt ist, **dadurch gekennzeichnet, dass** die Fülllage (5) als eine Vlieslage (9) oder mehrere Vlieslagen (9) ausgestaltet ist.

2. Felge (1) nach Anspruch 1, **dadurch gekennzeichnet, dass** die Breite der Fülllage (5) bis mindestens zu an der Felge (1) ausgebildete Felgenhörnern ragt oder maximal ca. 2,0 cm über die Felgenhörner in Flankenbereiche der Felge (1) hineinragt.

3. Felge (1) nach einem der vorhergehenden Ansprüche, **dadurch gekennzeichnet, dass** die Fülllage (5) als umlaufender / durchgehender oder aneinandergestückelter Streifen ausgebildet ist und/oder auf einer radialen Außenseite (4) der Felge (1) vorhanden ist.

4. Felge (1) nach Anspruch 3, **dadurch gekennzeichnet, dass** eine Hülse, etwa nach Art einer Flechthülse (2) vorhanden ist und die Fülllage (5) in Harz eingebettet ist.

5. Felge (1) nach einem der Ansprüche 1 bis 4, **dadurch gekennzeichnet, dass** die Fülllage (5) als vorkonfektionierter Ring oder Ringabschnitt ausgebildet ist.

6. Verfahren zum Herstellen einer Felge (1) für ein Fahrrad nach einem der vorhergehenden Ansprüche, wobei eine Vlieslage (9) an einer Außenseite einer Flechthülse (2) vor Benetzung mit Harz in einer Form unter Nutzung eines Liquid Composite Moldingverfahrens angebracht wird.

7. Verfahren nach Anspruch 6, **dadurch gekennzeichnet, dass** die Vlieslage (9) einen Bremsflankenbereich einschließt, oder von diesem entfernt wird oder von diesem beabstandet aufgebracht ist.

8. Verfahren nach Anspruch 6 oder 7, **dadurch gekennzeichnet, dass** in einem Montagezustand die Vlieslage (9) auf der Flechthülse (2) aufgespannt wird oder vorgespannt angebracht wird.

## Claims

1. Rim (1) for a bicycle wherein a filling layer (5) is present on the outer surface (4) and the rim (1) is manufactured by Liquid Composites Moulding, such as an RTM-method or a VARI-method, **characterised in that** the filling layer (5) is formed as a non-woven layer (9) or a plurality of non-woven layers (9).

2. Rim (1) according to claim 1, **characterised in that** the width of the filling layer (5) projects at least as far as rim flanges formed on the rim (1) or projects by at most approx. 2.0 cm beyond the rim flanges into flank regions of the rim (1).

3. Rim (1) according to any one of the preceding claims, **characterised in that** the filling layer (5) is formed as circumferential / continuous or pieced-together strips and/or is present on a radially outer surface (4) of the rim (1).

4. Rim (1) according to claim 3, **characterised in that** a sleeve, for instance in the manner of a braided sleeve (2), is present, and the filling layer (5) is embedded in resin.

5. Rim (1) according to any one of claims 1 to 4, **characterised in that** the filling layer (5) is formed as a prefabricated ring or ring segment.

6. Method for the manufacture of a rim (1) for a bicycle according to any one of the preceding claims, wherein a non-woven layer (9) is attached to an outer surface of a braided sleeve (2) before wetting with resin in a mould using a Liquid Composite Moulding method.

7. Method according to claim 6, **characterised in that** the non-woven layer (9) includes a brake flank region, or is removed therefrom or is applied with a spacing therefrom.

8. Method according to claim 6 or 7, **characterised in that** the non-woven layer (9) is, in an assembled state, tensioned on the braided sleeve (2) or is applied under pre-tension.

## Revendications

1. Jante (1) pour une bicyclette, dans laquelle une couche de remplissage (5) est présente sur la face extérieure (4) et la jante (1) est produite par moulage de composites liquides, par exemple grâce à un procédé RTM ou un procédé VARI, **caractérisée en ce que** la couche de remplissage (5) est réalisée sous la forme d'une couche de non-tissé (9) ou de plusieurs couches de non-tissé (9).

2. Jante (1) selon la revendication 1, **caractérisée en ce que** la largeur de la couche de remplissage (5) fait saillie au moins jusqu'à des rebords de jante réalisés au niveau de la jante (1) ou fait saillie d'au plus environ 2,0 cm au-delà des rebords de jante dans des régions de flanc de la jante (1).

3. Jante (1) selon l'une quelconque des revendications précédentes, **caractérisée en ce que** la couche de remplissage (5) est réalisée sous la forme de bandes périphériques/continues ou morcelées juxtaposées et/ou est présente sur une face extérieure (4) radiale de la jante (1).

4. Jante (1) selon la revendication 3, **caractérisée en ce qu'un** manchon, par exemple de type manchon tressé (2), est présent et la couche de remplissage (5) est noyée dans de la résine.

5. Jante (1) selon l'une quelconque des revendications 1 à 4, **caractérisée en ce que** la couche de remplissage (5) est réalisée sous la forme d'un anneau, ou section d'anneau, préconfectionné.

6. Procédé de fabrication d'une jante (1) pour une bicyclette selon l'une quelconque des revendications précédentes, dans lequel une couche de non tissé (9) est mise en place au niveau d'une face extérieure d'un manchon tressé (2) avant mouillage avec de la résine dans un moule en utilisant un procédé de moulage de composite liquide.

7. Procédé selon la revendication 6, **caractérisé en ce que** la couche de non-tissé (9) entoure une zone de flanc de freinage ou est éloignée de celle-ci ou est appliquée à distance de celle-ci.

8. Procédé selon la revendication 6 ou 7, **caractérisé en ce que,** à l'état assemblé, la couche de non-tissé (9) est serrée sur le manchon tressé (2) ou est mise en place de manière précontrainte.
